(19) Europäisches Patentamt
European Patent Office
Office européen des brevets

(11) **EP 1 478 096 B1**

(12) **FASCICULE DE BREVET EUROPEEN**

(45) Date de publication et mention
de la délivrance du brevet:
**30.06.2010 Bulletin 2010/26**

(51) Int Cl.:
***H04B 1/10*** (2006.01)

(21) Numéro de dépôt: **04102079.3**

(22) Date de dépôt: **13.05.2004**

(54) **Dispositif et procédé de réjection d'interférences auto-adaptatif**

Selbstanpassende Vorrichtung und Verfahren zur Interferenz-Unterdruckung

Self-adaptive method and device for the rejection of interference

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LV MK**

(30) Priorité: **16.05.2003 FR 0305910**

(43) Date de publication de la demande:
**17.11.2004 Bulletin 2004/47**

(73) Titulaire: **Thales**
**92200 Neuilly Sur Seine (FR)**

(72) Inventeur: **Laurent, Pierre-André**
**94117 CX, Arcueil (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 4 501 004     US-A- 5 410 750**

**Description**

L'invention concerne un dispositif et un procédé de réjection d'interférences d'un signal.

Elle s'applique notamment dans le contexte de télécommunications où le signal utile reçu est susceptible d'être additionné d'interférences ou de brouillage puissant, qui est cependant complètement différent du bruit thermique. Ce signal parasite est la plupart du temps « à bande étroite » comparé au signal utile, c'est-à-dire localement assimilable à une porteuse pure d'amplitude quasi-constante et à fréquence « lentement » variable.

Elle s'applique pour réjecter tout signal assimilable à un signal à bande étroite.

Trois techniques sont essentiellement utilisées dans l'art antérieur pour réjecter les interférences évoquées dans la présente invention.

La première technique, connue sous l'expression « Limiteur Sélectif en Fréquence » (Frequency Selective Limiter ou FSL) consiste à traiter le signal par blocs qui, en général, se recouvrent. Pour chaque bloc, la Transformée du Signal est calculée et elle est ensuite comparée à la valeur théorique qu'elle devrait avoir. Le traitement suivant consiste, pour chaque valeur complexe de la dite transformée, à modifier l'amplitude (et non la phase) de telle sorte que les effets des interférences soient aussi faibles que possible. Une telle modification peut consister à donner à tous les points l'amplitude théorique, à mettre à zéro ceux dont l'amplitude est « trop forte » ou à utiliser tout autre traitement approprié. Une transformée de Fourier inverse reconstitue le signal en principe débarrassé de l'interférence.

La deuxième technique est le « Filtrage Adaptatif » qui consiste à ajuster en continu les coefficients d'un filtre dit « prédicteur » pour minimiser l'erreur quadratique moyenne entre le signal qu'il prédit et les échantillons de signal précédents. Le filtre inverse du prédicteur est alors utilisé pour filtrer le signal afin de lui ôter la majorité d'interférences ou brouillage dont il est affecté.

Enfin, la troisième technique dite « Filtre Réjecteur » consiste à estimer le spectre en fréquence à long terme des interférences, à calculer un filtre qui atténue le signal reçu dans la ou les bandes de fréquences et à appliquer le filtre avant démodulation.

Le document US 5 410 750 décrit une méthode de suppression de l'interférence dans le domaine fréquentiel.

L'objet de l'invention concerne notamment une nouvelle approche permettant de réjecter les interférences d'un signal parasite notamment lorsqu'il est susceptible de gêner la détection des informations utiles.

L'invention est défini par les revendications.

L'invention concerne un procédé de réjection d'interférences d'un signal utile. Il est caractérisé en ce qu'il comporte au moins les étapes suivantes :

a) évaluer la phase de l'interférence et évaluer l'amplitude instantanée de l'interférence par la méthode des moindres carrés,
b) former le rapport $r=(B^2/(A^2+B^2))$ où A est la partie réelle de l'amplitude de l'interférence et B la partie complexe de l'amplitude de l'interférence,
c) si r est inférieur à une valeur seuil r0, corriger le signal en remplaçant l'échantillon central du signal par une somme pondérée formée de lui-même et des échantillons voisins.

La phase d'interférences est par exemple évaluée en utilisant une loi parabolique et l'amplitude d'interférences est évaluée par la méthode des moindres carrés.

Les coefficients de pondération utilisés pour la somme de l'étape c) s'expriment par exemple par les formules suivantes :

$$w(0) = \frac{2\,K\left[\,A^2 + B^2 + dAB2\,\right] + xy2}{\left[\,2\,K + 1\,\right]\left[\,A^2 + B^2 + dAB2\,\right] + xy2}$$

$$w(k) = -\frac{A^2 + B^2 + dAB2}{\left[\,2\,K + 1\,\right]\left[\,A^2 + B^2 + dAB2\,\right] + xy2}\,e^{j\,[teta(0)\,-\,teta(k)]}$$
$$k \neq 0$$

où K est le nombre d'échantillons considéré, k l'indice de l'échantillon,
A et B les amplitudes complexes de l'interférence,
dAB2 l'erreur quadratique moyenne d'estimation de A+jB,

xy2 la puissance moyenne du signal,
teta(k) la suite des phases lissées.

L'invention concerne aussi un système de réjection d'interférences d'un signal comportant au moins un dispositif de prise de décision utilisant les coefficients A, B des amplitudes complexes de l'interférence et un dispositif de traitement du signal en liaison avec les moyens de décision, le dispositif de traitement étant adapté à éliminer d'un échantillon choisi du signal, l'interférence estimée à partir des échantillons voisins et des échantillons précédents de l'échantillon choisi.

Il comporte par exemple un dispositif de sélection permettant de sélectionner comme échantillon choisi, l'échantillon central du signal.

Le dispositif de traitement comporte par exemple un dispositif d'estimation de la phase du signal à l'aide d'une loi parabolique, un dispositif d'estimation de l'amplitude complexe du signal, afin de déterminer le rapport du seuil de décision.

Le système peut comprendre un dispositif de contrôle automatique de gain disposé avant les moyens de correction et un dispositif d'écrêtage après les moyens de correction du signal.

L'invention présente notamment comme avantage de corriger le signal uniquement lorsque cela s'avère nécessaire.

D'autres caractéristiques et avantages de l'invention apparaîtront mieux à la lecture de la description qui suit d'un exemple donné à titre illustratif et nullement limitatif annexé des figures qui représentent :

• La figure 1 un exemple d'architecture d'un dispositif de réjection selon l'invention,
• La figure 2 le détail du système de calcul des exponentielles complexes de la figure 1,
• La figure 3 un système de multiplication et de sommation de la figure 1,
• La figure 4 le détail du système de traitement de la figure 1,
• La figure 5 le détail du système de lissage et de décision de la figure 1.

De manière à mieux faire comprendre l'objet de l'invention, la description qui suit donnée à titre illustratif et nullement limitatif concerne un système de réjection d'interférences destiné à permettre le fonctionnement de récepteurs en présence de très fortes interférences.

Le signal étant reçu par un récepteur comportant un système de réjection d'interférences selon l'invention, le procédé selon l'invention comporte par exemple au moins les étapes suivantes :

1) Estimer la phase de « l'interférence » et estimer l'amplitude de « l'interférence »,
2) Comparer le poids de la partie réelle et le poids de la partie complexe, du signal estimé,
3) Former le rapport $r=B^2/(A^2+B^2)$ et comparer ce rapport à une valeur seuil donnée,
4) Si la valeur de r est inférieure à cette valeur seuil alors corriger le signal en éliminant de l'échantillon central de signal, les interférences estimées à partir des échantillons voisins.

Les différentes étapes sont détaillées dans la suite de la description.

Pour le genre de systèmes envisagés dans la présente invention, de base, le signal utile doit pouvoir être reçu correctement (i.e. avec un taux d'erreurs extrêmement faible) avec un faible rapport signal/bruit, typiquement inférieur à 0 dB (bruit plus puissant que le signal). Estimation de la phase de l'interférence (ou brouilleur)

Le procédé travaille par exemple à partir d'un échantillon de signal reçu noté r(0) et de ses voisins précédents r(-n)...r(-1 ) et de ses voisins suivants r(1 )...r(n).

En faisant l'hypothèse que les interférences sont fortes, la phase de ces échantillons r(i) est en pratique voisine de la phase des interférences, perturbée par le signal utile et le bruit. Les dites phases sont notées phi(-n)...phi(n).

Les interférences ayant une fréquence variant lentement, ces phases peuvent être approximées par une loi localement parabolique obtenue par régression quadratique, après levée des ambiguïtés.

La loi localement parabolique peut aussi être utilisée avec des interférences ou du brouillage dont la fréquence change de façon discrète (interférence FSK, à 2 ou plusieurs tons) car, lors des transitions entre deux tons, les filtres nécessairement utilisés dans le récepteur ont tendance à rendre "continue" la variation de fréquence.

La levée d'ambiguïtés se fait par exemple de la façon suivante, où la fonction atan2(y, x) donne la phase (entre -PI et +PI) d'un signal complexe de la forme z = x + j y :

- faire phi(-n) = atan2(lm(r(-n), Re(r(-n))
- pour i = 1 - n ... n, fai re :

  - phi(i) = atan2(lm(r(i), Re(r(i))

- si phi(i) est supérieur à phi(i - 1) + PI      faire phi(i) = phi(i) + 2 PI
- si phi(i) est inférieur à phi(i - 1) - PI      faire phi(i) = phi(i) - 2 PI

La régression quadratique consiste ensuite à minimiser l'erreur totale E donnée par :

$$E = \sum_{i=-n}^{i=n} \left| a\, i^2 + b\, i + c - phi(i) \right|^2 \qquad (1)$$

La solution est donnée par les expressions suivantes :

$$a = \frac{15\,(-(n\, s0) - n^2\, s0 + 3\, s2)}{n\,(1+n)\,(-1+2\,n)\,(1+2\,n)\,(3+2\,n)}$$

$$b = \frac{3\, s1}{n\,(1+n)\,(1+2\,n)} \qquad (2)$$

$$c = \frac{3\,(-s0 + 3\, n\, s0 + 3\, n^2\, s0 - 5\, s2)}{(-1+2\,n)\,(1+2\,n)\,(3+2\,n)}$$

avec :

$$s0 = \sum_{i=-n}^{i=n} phi(i) \qquad\qquad s1 = \sum_{i=-n}^{i=n} i\, phi(i) \qquad (3)$$

$$s2 = \sum_{i=-n}^{i=n} i^2\, phi(i)$$

Le calcul peut se faire par itération de la façon suivante :

$$s2(t) = s2(t-1) - 2\, s1(t-1) + s0(t-1) - (n+1)^2\, phi(t-n-1) + n^2\, phi(t+n)$$

$$s1(t) = s1(t-1) - s0(t-1) + (n+1)\, phi(t-n-1) + n\, phi(t+n)$$

$$s0(t) = s0(t-1) + phi(t+n) - phi(t-n-1)$$

La phase estimée de l'échantillon central d'indice 0, à l'instant t, est simplement égale à c.
On note teta(k) la suite de ces phases lissées.
Estimation de l'amplitude de l'interférence ou du brouilleur

On suppose que, au voisinage de l'instant d'observation, les interférences sont de la forme :

$$br(k) = (A + jB)(\cos(teta(k)) + j\sin(teta(k)))$$ (4)

Sachant que la majorité du signal reçu est formé des interférences, on estime les composantes de l'amplitude complexe des interférences A et B par l'équation simple suivante, où l'on considère l'échantillon de signal reçu central de rang k = 0 et ses K voisins de part et d'autre :

$$Z = \frac{1}{2K+1}\sum_{k=-K}^{k=K} r(k)(\cos(teta(k)) - j\sin(teta(k)))$$
$$A = Re(Z), \quad B = Im(Z)$$ (5)

r(k) correspond à l'échantillon k du signal reçu.

L'erreur qui entache cette estimation est évaluée par la suite.

Le signal utile lui-même étant inconnu, le procédé estime sa puissance moyenne. Pour cette estimation on considère des échantillons de signal décorrélés, si bien que deux valeurs successives de k concernent deux échantillons de signal reçu espacés par exemple de l'inverse du rythme de modulation exprimé en bauds.

De plus, l'erreur faite sur les phases teta(k), est supposée négligeable : l'interférence est censée avoir réellement ces phases.

On note A0 et B0 les vraies valeurs des composantes de l'amplitude complexe de l'interférence, dA et dB les erreurs A - A0 et B - B0, et x(k) + j y(k) le signal utile lui-même. On pose :

$$r(k) = (A0 + jB0)(\cos(teta(k)) + j\sin(teta(k))) + (x(k) + jy(k))$$ (6)

Les erreurs des composantes de l'amplitude complexe de l'interférence s'expriment alors par les relations suivantes :

$$dA = A - A0 = \frac{1}{2K+1}\sum_{k=-K}^{k=K} x(k)\cos(teta(k)) - y(k)\sin(teta(k))$$

$$dB = B - B0 = \frac{1}{2K+1}\sum_{k=-K}^{k=K} x(k)\sin(teta(k)) + y(k)\cos(teta(k))$$ (7)

l'erreur quadratique moyenne d'estimation de A + j B (amplitude complexe de l'interférence) est donnée par la relation suivante :

$$dAB2 = \langle dA^2 + dB^2 \rangle = \frac{\langle x(k)^2 + y(k)^2 \rangle}{2K+1} = \frac{xy2}{2K+1}$$ (8)

Le procédé estime ensuite xy2, correspondant à la puissance moyenne du signal. Cette étape est effectuée par exemple en calculant la différence entre la puissance moyenne du signal et la puissance estimée de l'interférence. Ceci conduit à :

$$\text{delta} = \frac{1}{2\,K+1} \sum_{k=-K}^{k=K} |r(k)|^2 - \left( A^2 + B^2 \right) \tag{9}$$

Son espérance mathématique est alors :

$$\langle \text{delta} \rangle = A0^2 + B0^2 + \frac{1}{2\,K+1} \sum_{k=-K}^{k=K} \left( x(k)^2 + y(k)^2 \right) - \left( (A0+dA)^2 + (B0+dB)^2 \right) \tag{10}$$

soit:

$$\langle \text{delta} \rangle = xy2 - \left( dA^2 + dB^2 \right) = xy2 - dAB2$$

$$\langle \text{delta} \rangle = \frac{2\,K\ xy2}{2\,K+1}$$

La puissance moyenne estimée du signal est :

$$xy2 = \frac{2\,K+1}{2\,K}\,\text{delta} \tag{11}$$

et
l'erreur quadratique d'estimation de l'interférence :

$$dAB2 = \frac{\text{delta}}{2\,K} \tag{12}$$

Correction du signal reçu
Lorsque la décision de corriger le signal est prise, le procédé comporte une étape où le réjecteur essaie d'estimer au mieux l'échantillon de signal central par combinaison linéaire de lui-même et de ses 2 K voisins de gauche et de droite. Cette combinaison linéaire est optimisée pour minimiser le carré du module de l'erreur d'estimation. Si le signal estimé est noté zEst0, on pose :

$$zEst0 = \sum_{k=-K}^{k=K} w(k)\,r(k) \tag{13}$$

soit, en considérant la vraie valeur de l'amplitude de l'interférence :

$$zEst0 = \sum_{k=-K}^{k=K} w(k) \left[ (A0 + j\,B0)(\cos(teta(k)) + j\,\sin(teta(k))) + (x(k) + j\,y(k)) \right] \tag{14}$$

Les pondérations complexes $w(k)$ sont ajustées de façon à minimiser l'espérance mathématique de l'erreur quadratique moyenne d'estimation, à savoir :

$$(E) = \left\{ |zEst0 - (x(0) + j\,y(0))|^2 \right\}$$

$$(E) = xy2 \left[ 1 - w(0) - w(0)^* + \sum_{k=-K}^{k=K} w(k)\, w(k)^* \right]$$

$$+ \left[ A^2 + B^2 + dAB2 \right] \sum_{k=-K}^{k=K} w(k)\, e^{j\,teta(k)} \sum_{k=-K}^{k=K} w(k)^*\, e^{-j\,teta(k)} \tag{15}$$

La solution qui minimise cette quantité conduit aux coefficients de pondération complexes :

$$w(0) = \frac{2\,K\left[ A^2 + B^2 + dAB2 \right] + xy2}{(2\,K + 1)\left[ A^2 + B^2 + dAB2 \right] + xy2}$$

$$w(k) = -\frac{A^2 + B^2 + dAB2}{(2\,K + 1)\left[ A^2 + B^2 + dAB2 \right] + xy2}\, e^{j\,[teta(0) - teta(k)]}$$
$$k \neq 0 \tag{16}$$

Pour obtenir la solution on peut considérer que $w(0)$ est nécessairement réel pour ne pas changer la phase du signal utile (au centre) et que les $w(k)$ ont tous la même importance et doivent soustraire et "redresser" l'échantillon de l'interférence qui leur est affecté.

L'erreur quadratique minimale ainsi obtenue est :

$$(E) = \frac{\left[ A^2 + B^2 + dAB2 \right] xy2}{(2\,K + 1)\left[ A^2 + B^2 + dAB2 \right] + xy2}$$

$$(E) = \frac{\left[ A0^2 + B0^2 \right] xy2}{(2\,K + 1)\left[ A0^2 + B0^2 \right] + xy2}$$

Exprimée à partir de la puissance du signal (S) et celle de l'interférence (J, comme "jammer"), l'erreur quadratique s'exprime :

$$\langle E \rangle = \frac{S}{2K + 1 + \dfrac{S}{J}} \tag{17}$$

Si P est la puissance moyenne du signal, donnée par :

$$P = \frac{1}{2K + 1} \sum_{k = -K}^{k = K} |r(k)|^2$$

on a:

$$delta = P - A^2 - B^2$$

$$xy2 = \frac{2K + 1}{2K} \left| P - A^2 - B^2 \right|$$

$$dAB2 = \frac{\left| P - A^2 - B^2 \right|}{2K}$$

Dans le cas limite où A = B = 0, les coefficients de pondération s'expriment de la manière suivante :

$$\begin{aligned} w(0) &= \frac{1 + 4K}{2(1 + 2K)} \text{ voisin de } 1 \\ |w(k)| &= \frac{1}{2(1 + 2K)} \text{ voisin de } 0 \end{aligned} \tag{18}$$

ce qui revient à conserver l'échantillon central tel quel.
Dans l'autre cas limite, où l'interférence ou le brouillage est très puissant, les coefficients de pondération sont :

$$\begin{aligned} w(0) &= \frac{2K}{1 + 2K} \text{ voisin de } 1 \\ |w(k)| &= \frac{1}{(1 + 2K)} \text{ voisin de } 1/(2K) \end{aligned} \tag{19}$$

ce qui revient à enlever de l'échantillon central r(0) l'interférence estimée à partir des échantillons voisins r(-n)...r(-1)....r(1).....r(n).
Ces coefficients sont utilisés pour obtenir la valeur corrigée du signal en utilisant la formule

$$zEst0 = \sum_{k=-K}^{k=K} w(k)\, r(k) \qquad (20)$$

Décision de corriger le signal reçu

L'étape de décision de corriger le signal reçu est effectuée par exemple de la manière décrite ci-après.

Lorsqu'une interférence forte est présente, l'échantillon de signal central est (presque) exclusivement de l'interférence et sa valeur estimée à partir de ses voisins est très voisine de la valeur observée. La valeur de B est très petite comparée à la valeur de A (après correction de phase). Un bon critère consiste donc à calculer le rapport :

$$r = \frac{B^2}{A^2 + B^2} \qquad (21)$$

Plus ce rapport est faible, plus la puissance de l'interférence est élevée et plus il est pertinent d'utiliser le réjecteur.

Le procédé comporte une étape de comparaison de la valeur du rapport r à un seuil r0 conduisant à une décision d'utiliser le réjecteur lorsque r est plus petit que r0. La valeur r0 est par exemple ajustée expérimentalement selon le système. Elle est par exemple choisie égale à 0.001.

Pour une valeur de r ayant tendance à fluctuer, surtout si la puissance de l'interférence n'est pas très élevée, la décision d'utiliser le réjecteur est effectuée sur une version filtrée de r. Cette version filtrée est par exemple la moyenne calculée sur les 2 M échantillons voisins de l'échantillon courant.

Transitoires

Lorsque l'interférence change de temps en temps de fréquence de façon "abrupte" (cas des interférences FSK, à commutation de fréquence), il y a réjection imparfaite des fins et des débuts des parties où la fréquence est constante. Cette réjection imparfaite se traduit alors par des impulsions de l'interférence d'autant plus élevées que l'interférence est puissante, parfois même jusqu'à empêcher la démodulation.

Le procédé selon l'invention utilise par exemple deux dispositifs disposés par exemple en cascade :

- un contrôle automatique de gain (CAG) rapide sur le signal avant le réjecteur, le temps de réaction du CAG étant court comparé à la durée minimale des impulsions de l'interférence, et long comparé à l'inverse de la largeur de bande du signal

- un écrêteur, après le réjecteur, réglé de telle sorte que :

  - le signal seul ou le signal traité en présence d'une interférence forte ne soit jamais écrêté (ou suffisamment peu pour que cela n'ait aucune influence sur les performances)

  - lors des transitoires, l'écrêtage transforme les impulsions de l'interférence résiduelles en impulsions (à amplitude constante) beaucoup plus faibles afin de perturber au minimum la réception.

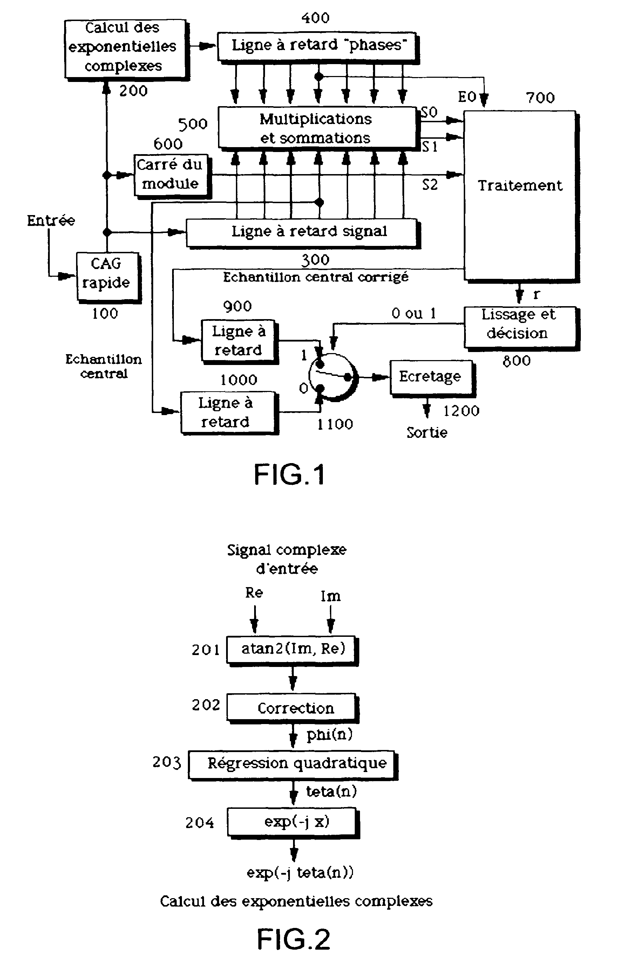

La figure 1 représente un exemple d'architecture du dispositif de réjection selon l'invention. Le dispositif comporte par exemple au moins les éléments suivants :

- un contrôle automatique de gain rapide 100 en entrée, recevant le signal à traiter (signal composé du signal utile et de l'interférence),

- un système de calcul des exponentielles complexes 200 mettant en oeuvre les processus de calcul de la phase du signal, de sa correction, de la régression quadratique et du calcul des exponentielles complexes exposées précédemment (dans l'étape d'estimation de la phase),

- une ligne à retard 300 pour le signal régulé, correspondant à 2 K + 1 échantillons décorrélés, avec une sortie particulière pour l'échantillon central ; un retard initial supplémentaire est prévu pour compenser le retard introduit par le dispositif 200 (détaillé plus loin),

- une ligne à retard "phases" 400 pour les exponentielles complexes, de la même longueur que la précédente, dont la sortie centrale correspond à la phase de l'échantillon centrale et est notée E0,

- un système de multiplication et sommation 500 qui génère deux sorties S0 et S1 correspondant respectivement à l'échantillon de signal central et à ses voisins dans le passé et dans le futur,

- un système 600 qui calcule le carré du module du signal S2,

- un système de traitement 700 qui, à partir des quantités S0, S1, S2 et Po se charge d'élaborer l'échantillon de signal central corrigé et la quantité r à partir de laquelle se fera la commutation réjection / non réjection, avec Po représentant la phase de l'échantillon central,

- le système 800 de lissage qui décide de la commutation, il lisse la quantité r,

- deux lignes à retard 900 et 1000 destinées à synchroniser l'échantillon central non corrigé, l'échantillon central corrigé, et la décision prise de commutation ou de non commutation,

- un commutateur 1100 permettant de choisir l'échantillon corrigé ou non corrigé en fonction de la décision,

- un écrêteur 1200 qui supprime les impulsions de l'interférence résultant des transitoires lors des changements brusques de la fréquence de l'interférence.

La figure 2 schématise en détail le système de calcul des exponentielles complexes.
Le dispositif 200 comporte, dans l'ordre :

- un système de calcul de la phase des échantillons du signal supposé être de la forme Re + j Im soit par logiciel (fonction atan2 à 2 arguments) soit par d'autres moyens, par exemple l'algorithme connu sous le nom de CORDIC décrit dans les livres connus de l'Homme du métier en traitement du signal; il est à noter que, le signal étant généralement à faible rapport signal/bruit, une évaluation relativement grossière de la phase peut être acceptée (par exemple, 1/256 ème de tour). La phase est donnée entre -Pi et +Pi,

- le système de correction 202 effectue les corrections de +2 Pi ou -2 Pi assurant le maximum de continuité de phase,

- le dispositif 203 se charge du calcul itératif des coefficients a, b, c de l'approximation locale quadratique de la phase et fournit en sortie la phase estimée au centre de la plage de calcul,

- le système 204 calcule l'exponentielle complexe associée à la dite phase, par exemple en lisant une table à l'adresse adéquate.

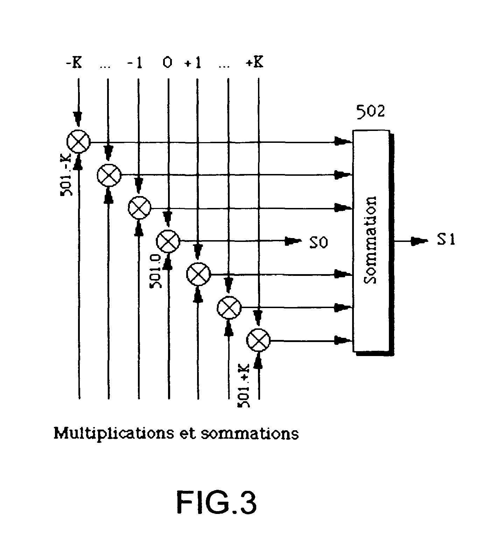

La figure 3 représente en détail un système de multiplication et sommation.

- Le système 500 de sommation effectue au moyen des multiplieurs 501.-K ... 501.0 ... 501.+K les multiplications des échantillons de sortie des lignes à retard signal 300 et "phases" 400.

- La sortie du multiplieur 501.0 fournit le signal de sortie SO.

- Les sorties des autres multiplieurs sont sommées pour générer le signal S2, somme des produits des échantillons voisins de l'échantillon central corrigés de leurs phases estimées respectives.

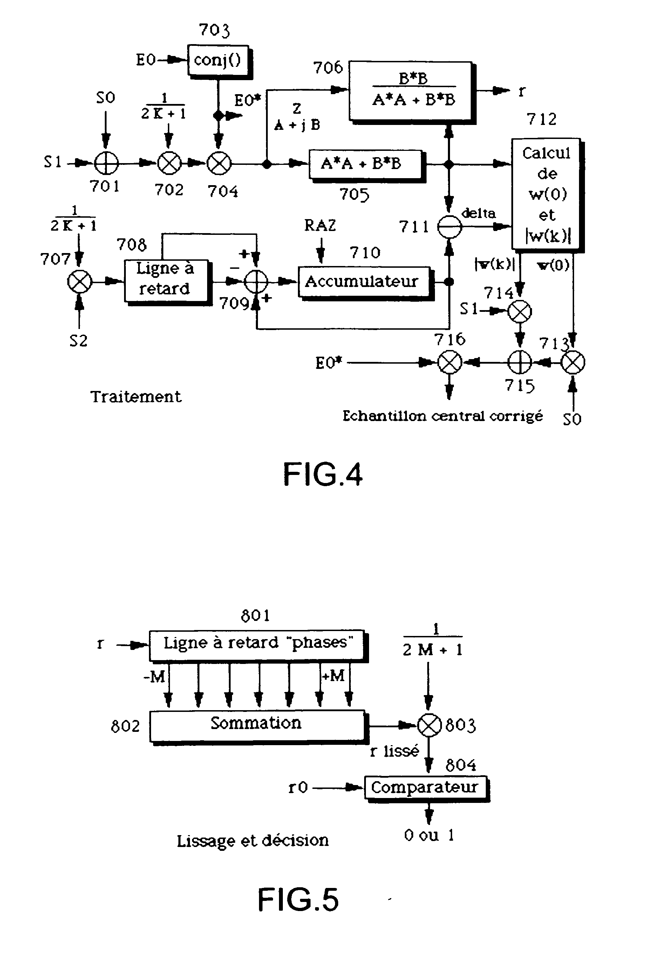

La figure 4 schématise le détail du système de traitement 700.

- Le système 700 calcule l'échantillon de signal central corrigé et la quantité r à partir de laquelle se fera la commutation réjection / non réjection à partir des quantités S0, S1, S2 et Po.

- Les quantités S0 et S1 sont sommées dans l'additionneur 701, et la somme multipliée par 1/(2 K + 1) dans le multiplieur 702 et par le conjugué de Po (Po*, calculé par le conjugateur 703) dans le multiplieur 704 pour fournir la quantité Z = A + j B utilisée dans l'exposé précédent.

- Le carré du module de Z (amplitude complexe du l'interférence) est calculé par le dispositif 705 et la quantité r dans le dispositif 706.

- Le reste du système 700 est destiné à calculer l'échantillon de signal central corrigé.

- La moyenne des carrés des modules du signal est calculée à partir du signal S2 renormalisé par le multiplieur 707 au moyen de la ligne à retard 708, de l'additionneur / soustracteur 709 et de l'accumulateur 710.

- La ligne à retard 708 comporte elle aussi un retard initial pour compenser celui du système 200.

L'ensemble accumulateur + ligne à retard + l'additionneur / soustracteur est configuré pour fournir en sortie de l'accumulateur la moyenne des carrés des modules de l'échantillon à corriger et de ses K voisins.

- Le procédé soustrait alors de la sortie de l'accumulateur le carré du module de Z par le soustracteur 711 pour obtenir la quantité delta citée plus haut.

- Le dispositif 712 calcule le poids w(0) à appliquer à l'échantillon central et le module commun des poids voisins |w(k)| (appliqué aux autres échantillons) lesquels pondèrent respectivement le signal S0 dans le multiplieur 713 et le signal S1 dans le multiplieur 714 avant addition dans le sommateur 715.

- La sortie du sommateur 715 est finalement multipliée par l'exponentielle complexe conjuguée Po* par le multiplieur 716 qui fournit finalement l'échantillon central de signal corrigé, avec la bonne phase.

- Il est aussi possible de multiplier directement S0 et S1 par Po* et ne pas faire la multiplication finale, et/ou intégrer les multiplications par des constantes dans le système de calcul 712.

La figure 5 représente en détail le système 800 de lissage qui décide de la commutation. Il comporte au moins :

- une ligne à retard 801 dont on somme les sorties dans le sommateur 802.

- La sortie du sommateur est renormalisée par le multiplieur 803 et comparée à un seuil r0 dans le comparateur 804.

- Si l'entrée du comparateur, correspondant à la valeur du rapport r est en dessous de r0, le comparateur donne en sortie la valeur 1, sinon il donne la valeur 0.

- Il est possible d'éviter l'utilisation du multiplieur 803 en prenant un seuil r0 (2 M + 1) fois plus élevé que sa valeur théorique.

**Revendications**

1.  Procédé de réjection d'interférence d'un signal utile **caractérisé en ce qu'**il comporte au moins les étapes suivantes :

   a) évaluer la phase de l'interférence et évaluer l'amplitude instantanée de l'interférence par la méthode des moindres carrés,
   b) former le rapport $r=(B^2/(A^2+B^2))$ où A est la partie réelle de l'amplitude de l'interférence et B la partie complexe de l'amplitude de l'interférence,
   c) si r est inférieur à une valeur seuil r0, corriger le signal en remplaçant l'échantillon central du signal par une somme pondérée formée de lui-même et des échantillons voisins.

2.  Procédé selon la revendication 1 **caractérisé en ce que** la phase de l'interférence est évaluée en utilisant une loi parabolique et l'amplitude de l'interférence est évaluée par la méthode des moindres carrés.

3.  Procédé selon la revendication 1 **caractérisé en ce que** l'on utilise les coefficients de pondération suivant :

$$\left| w(0) = \frac{2\,K\,\left[A^2 + B^2 + dAB2\right] + xy2}{\left[2\,K + 1\right]\left[A^2 + B^2 + dAB2\right] + xy2} \right|$$

$$w(k) = -\frac{A^2 + B^2 + dAB2}{\left[2\,K + 1\right]\left[A^2 + B^2 + dAB2\right] + xy2}\, e^{j\,[teta(0)\,-\,teta(k)]}$$

$$k \neq 0 \qquad\qquad (16)$$

où K est le nombre d'échantillons considéré, k l'indice de l'échantillon,
A et B les amplitudes complexes de l'interférence,
dAB2 l'erreur quadratique moyenne d'estimation de A+jB,
xy2 la puissance moyenne du signal,
teta(k) la suite des phases lissées.

4. Procédé selon la revendication 1 **caractérisé en ce que** la valeur de r est filtrée et correspond à la moyenne calculée sur les 2M échantillons voisins de l'échantillon central.

5. Procédé selon la revendication 1 **caractérisé en ce qu'**il comporte une étape de contrôle automatique du gain du signal avant l'étape de correction et une étape de transformation des impulsions de l'interférence résiduelles en impulsions beaucoup plus faibles sur le signal corrigé.

6. Système de réjection de l'interférence d'un signal selon la revendication 1 comportant au moins un dispositif (800, 1100) de prise de décision utilisant les coefficients A, B des amplitudes complexes de l'interférence et un dispositif de traitement (700) du signal en liaison avec les moyens de décision, le dispositif de traitement étant adapté à éliminer d'un échantillon choisi du signal, l'interférence estimée à partir des échantillons voisins et des échantillons précédents de l'échantillon choisi.

7. Système selon la revendication 6 **caractérisé en ce qu'**il comporte un dispositif de sélection (400) permettant de sélectionner comme échantillon choisi, l'échantillon central du signal.

8. Système selon la revendication 6 **caractérisé en ce que** le dispositif de traitement comporte un dispositif d'estimation de la phase du signal à l'aide d'une loi parabolique, un dispositif d'estimation de l'amplitude complexe du signal, afin de déterminer le rapport du seuil de décision.

9. Système selon la revendication 6 **caractérisé en ce qu'**il comporte un dispositif de contrôle automatique de gain (100) disposé avant le dispositif de traitement (700) et un dispositif d'écrêtage (1200) disposé après le dispositif de traitement du signal.

**Claims**

1. A method for the rejection of interference from a useful signal, **characterised in that** it comprises at least the following steps:

   a) estimating the interference phase and estimating the instantaneous amplitude of the interference by means of the least error squares method;
   b) generating the ratio r=(B$^2$/(A$^2$+B$^2$)), where A is the real part of the interference amplitude and B is the complex part of the interference amplitude;
   c) correcting the signal, if r is below a threshold value r0, by replacing the central sample of the signal by a weighted sum created by said central sample and neighbouring samples.

2. The method according to claim 1, **characterised in that** the interference phase is evaluated by means of a parabolic law and the interference amplitude is evaluated by means of the least error squares method.

3. The method according to claim 1, **characterised in that** the following weighting coefficients are used:

$$\left| w(0) = \frac{2\,K \left| A^2 + B^2 + dAB2 \right| + xy2}{\left| 2\,K + 1 \right| \left| A^2 + B^2 + dAB2 \right| + xy2} \right|$$

$$w(k) = -\frac{A^2 + B^2 + dAB2}{\left| 2\,K + 1 \right| \left| A^2 + B^2 + dAB2 \right| + xy2}\, e^{j\,(teta(0)\,-\,teta(k))}$$

$$k \neq 0 \tag{16}$$

where K is the relevant number of samples, k is the index of the sample,
A and B are the complex interference amplitudes,
dAB2 is the mean square error of estimation of A+jB,
xy2 is the mean power of the signal,
teta(k) is the sequence of the smoothed phases.

**4.** The method according to claim 1, **characterised in that** the value of r is filtered and corresponds to the mean computed on the 2M neighbouring samples of the central sample.

**5.** The method according to claim 1, **characterised in that** it includes a step of automatically controlling the gain of the signal before the compensation step and a step of converting residual interference pulses into much weaker pulses on the compensated signal.

**6.** A system for the rejection of interference from a signal according to claim 1, including at least one decision-making device (800, 1100) using coefficients A, B of the complex interference amplitudes and a signal processing device (700) connected to the decision-making means, the processing device being suitable to eliminate, from a selected sample of the signal, the interference estimated from the neighbouring signals and the samples preceding the selected sample.

**7.** The system according to claim 6, **characterised in that** it comprises a selection device (400) allowing the central sample of the signal to be selected as the selected sample.

**8.** The system according to claim 6, **characterised in that** the processing device includes a device for estimating the signal phase by means of a parabolic law, and a device for estimating the complex amplitude of the signal, in order to determine the decision threshold ratio.

**9.** The system according to claim 6, **characterised in that** it includes an automatic gain control device (100) disposed before the processing device (700) and a limiting device (1200) disposed after the signal processing device.

**Patentansprüche**

**1.** Verfahren zum Zurückweisen von Interferenzen von einem Nutzsignal, **dadurch gekennzeichnet, dass** es wenigstens die folgenden Schritte beinhaltet:

a) Beurteilen der Phase der Interferenz und Beurteilen der momentanen Amplitude der Interferenz mit der Methode der kleinsten Fehlerquadrate;
b) Erzeugen des Verhältnisses r=(B$^2$/(A$^2$+B$^2$)), wobei A der reale Teil der Amplitude der Interferenz und B der komplexe Teil der Amplitude der Interferenz ist;
c) Korrigieren, wenn r kleiner als ein Schwellenwert r0 ist, des Signals durch Ersetzen des mittleren Abtastwertes des Signals durch eine gewichtete Summe, die aus dem genannten mittleren Abtastwert und benachbarten Abtastwerten gebildet wurde.

**2.** Verfahren nach Anspruch 1, **dadurch gekennzeichnet, dass** die Phase der Interferenz anhand eines parabolischen Gesetzes beurteilt wird und die Amplitude der Interferenz mit der Methode der kleinsten Fehlerquadrate beurteilt wird.

**3.** Verfahren nach Anspruch 1, **dadurch gekennzeichnet, dass** die folgenden Gewichtungskoeffizienten verwendet werden:

$$\left| w(0) = \frac{2\,K\,\left| A^2 + B^2 + dAB2 \right| + xy2}{\left| 2\,K + 1 \right| \left| A^2 + B^2 + dAB2 \right| + xy2} \right|$$

$$w(k) = -\frac{A^2 + B^2 + dAB2}{\left| 2\,K + 1 \right| \left| A^2 + B^2 + dAB2 \right| + xy2}\, e^{j\,\left| teta(0)\, -\, teta(k) \right|}$$

$$k \neq 0 \qquad\qquad (16)$$

wobei K die Zahl der berücksichtigten Abtastwerte und k der Index des Abtastwertes ist,
A und B die komplexen Amplituden der Interferenz sind,
dAB2 der mittlere quadratische Fehler der Schätzung von A+jB ist,
xy2 die mittlere Leistung des Signals ist, und
teta(k) die Sequenz der geglätteten Phasen ist.

4. Verfahren nach Anspruch 1, **dadurch gekennzeichnet, dass** der Wert von r gefiltert ist und dem Mittelwert entspricht, der an den 2M benachbarten Abtastwerten des mittleren Abtastwertes berechnet wurde.

5. Verfahren nach Anspruch 1, **dadurch gekennzeichnet, dass** es einen Schritt des automatischen Regelns der Verstärkung des Signals vor dem Korrekturschritt und einen Schritt des Umwandelns von Interferenzrestimpulsen in viel schwächere Impulse an dem korrigierten Signal beinhaltet.

6. System zum Zurückweisen der Interferenz von einem Signal nach Anspruch 1, das wenigstens ein Entscheidungsgerät (800, 1100), das die Koeffizienten A, B der komplexen Amplituden der Interferenz verwendet, und ein mit dem Entscheidungsgerät verbundenes Signalverarbeitungsgerät (700) umfasst, wobei das Verarbeitungsgerät die Aufgabe hat, die von den benachbarten Abtastwerten geschätzte Interferenz und die Abtastwerte vor dem gewählten Abtastwert von einem gewählten Abtastwert des Signals zu eliminieren.

7. System nach Anspruch 6, **dadurch gekennzeichnet, dass** es ein Auswahlgerät (400) umfasst, mit dem der mittlere Abtastwert des Signal als gewählter Abtastwert ausgewählt werden kann.

8. System nach Anspruch 6, **dadurch gekennzeichnet, dass** das Verarbeitungsgerät ein Gerät zum Schätzen der Phase des Signals mittels eines parabolischen Gesetzes und ein Gerät zum Schätzen der komplexen Amplitude des Signals umfasst, um das Entscheidungsschwellenverhältnis zu bestimmen.

9. System nach Anspruch 6, **dadurch gekennzeichnet, dass** es ein vor dem Verarbeitungsgerät (700) angeordnetes automatisches Verstärkungsregelungsgerät (100) und ein hinter dem Signalverarbeitungsgerät angeordnetes Begrenzungsgerät (1200) umfasst.

FIG.1

Calcul des exponentielles complexes

FIG.2

Multiplications et sommations

# FIG.3

FIG.4

FIG.5

**EP 1 478 096 B1**

## RÉFÉRENCES CITÉES DANS LA DESCRIPTION

**Documents brevets cités dans la description**

- US 5410750 A